# EUROPEAN PATENT APPLICATION

(11) **EP 4 803 480 A1**
(43) Date of publication of application: **09.09.2026**
(21) Application number: 24885701.3
(22) Date of filing: 29.10.2024
(51) Int. Cl.: C01B 25/37, C01G 23/00

(54) **METHOD FOR PRODUCING TITANIUM PHOSPHATE POWDER**

(30) Priority: 02.11.2023 JP 2023188363
(71) Applicant: Fujimi Incorporated, Kiyosu-shi, Aichi 452-8502 (JP)
(72) Inventor: NOMURA, Ryo, Kiyosu-shi, Aichi 452-8502 (JP); MIWA, Naoya, Kiyosu-shi, Aichi 452-8502 (JP); ASHITAKA, Keiji, Kiyosu-shi, Aichi 452-8502 (JP)
(74) Representative: Maiwald GmbH
(86) International application number: PCT/JP2024/038494
(87) International publication number: WO 2025/094933

(57) **Abstract**

Provided is a means capable of reducing a foreign material in a titanium phosphate powder. A method for producing a titanium phosphate powder, the method including preparing a mixture by mixing a titanium sulfate solution obtained by contacting a raw-material titanium sulfate solution with activated carbon followed by filtration with a filter, and a phosphoric acid solution.

## Description

### TECHNICAL FIELD

The present invention relates to a method for producing a titanium phosphate powder.

### BACKGROUND ART

It is known that titanium phosphate can be formed into crystalline particles represented by the chemical formula Ti(HPO₄)₂·nH₂O (n is an integer).

WO 2018/180797 discloses a method for producing a titanium phosphate powder including plate-shaped crystalline particles of titanium phosphate through a reaction of hydrothermal synthesis using a raw material containing titanium and phosphorus, in which a mixture of titanium sulfate and phosphoric acid is used as the raw material.

### SUMMARY OF INVENTION

WO 2018/180797 uses a mixture of titanium sulfate and phosphoric acid as the raw material containing titanium and phosphorus. Titanium sulfate can be obtained as a titanium sulfate solution by dissolving titanium-containing ore in sulfuric acid, and removing impurities such as iron components using a coagulant. The titanium sulfate solution contains dissolved organic carbon derived from the coagulant. The dissolved organic carbon is not separated even through the cleaning (washing) process in the production of a titanium phosphate powder, and remains in the titanium phosphate powder as a foreign material. Therefore, it is desirable to further reduce the foreign material in the titanium phosphate powder in the production of a titanium phosphate powder.

Accordingly, the present invention has been made in consideration of the above circumstances, and aims to provide a means capable of removing a foreign material from a titanium phosphate powder.

The present inventors have conducted intensive research to solve the above problems. As a result, the present inventors have found that the above problems can be solved by a method for producing a titanium phosphate powder, the method including preparing a mixture by mixing a titanium sulfate solution obtained by contacting a raw-material titanium sulfate solution with activated carbon followed by filtration with a filter, and a phosphoric acid solution, thereby accomplishing the present invention.

### BRIEF DESCRIPTION OF DRAWINGS

Fig. 1 is a graph showing the results of XRD measurement of the raw-material titanium sulfate solution 1.
Fig. 2 is a graph showing the evaluation results of the transmittance of the raw-material titanium sulfate solution 1.
Fig. 3 is a graph showing the results of measuring the transmission spectra of the raw-material titanium sulfate solution 1.
Fig. 4 is a graph showing the evaluation results of the transmittance of the raw-material titanium sulfate solution 1.

### DESCRIPTION OF EMBODIMENTS

Hereinafter, embodiments according to an aspect of the present invention will now be described. The present invention is not limited to the following embodiments, and various modifications can be made within the scope of the claims. The embodiments described herein can optionally be combined with one another to form other embodiments.

As used herein, the expression "X to Y" that indicates a range means "X or more and Y or less". In addition, unless otherwise specified, operations and measurements of physical properties, etc. are performed in the conditions of room temperature (20 to 25 °C) and relative humidity of 40 to 50% RH.

An embodiment of the present invention refers to a method for producing a titanium phosphate powder, the method including preparing a mixture by mixing a titanium sulfate solution obtained by contacting a raw-material titanium sulfate solution with activated carbon followed by filtration with a filter, and a phosphoric acid solution. According to the present invention, it is possible to reduce a foreign material (in particular, organic matter) in the titanium phosphate powder.

As described herein, the titanium phosphate is represented by the chemical formula Ti(HPO₄)₂·nH₂O (0 ≤ n ≤ 1).

As described herein, the titanium phosphate powder refers to a titanium phosphate particle powder or a composition containing the same. The titanium phosphate powder may contain impurities (in particular, organic matter) originating from the production process (e.g., coagulant) as a foreign material. As used herein, the powder contains not only substances in powder form (in a dry state) but also substances that are present in a dispersed state in a dispersing medium and can be obtained in powder form when the dispersing medium is evaporated.

The method for producing a titanium phosphate powder according to the present embodiment includes preparing a mixture by mixing a titanium sulfate solution obtained by contacting a raw-material titanium sulfate solution with activated carbon followed by filtration with a filter, and a phosphoric acid solution.

The titanium sulfate solution according to the present embodiment is obtained by contacting a raw-material titanium sulfate solution with activated carbon followed by filtration with a filter. The method of contacting the raw-material titanium sulfate solution with the activated carbon is not particularly limited, and it may be a method of mixing the raw-material titanium sulfate solution and the activated carbon, or may be a method of passing the raw-material titanium sulfate solution through a column charged with the activated carbon.

The raw-material titanium sulfate solution to be brought into contact with the activated carbon contains titanium sulfate (Ti(HSO₄)₂) as a titanium-containing substance. As used herein, the titanium sulfate means a solution containing sulfate ions (SO₄²⁻) and titanium ions (Ti⁴⁺) in water.

The raw-material titanium sulfate solution is not particularly limited, and can be produced, for example, by using a sulfuric acid method, or by dissolving titanyl sulfate with water. In the sulfuric acid method, a raw-material titanium sulfate solution can be obtained by dissolving titanium-containing ore (e.g., ilmenite ore) in sulfuric acid, and removing iron.

As the raw-material titanium sulfate solution to be brought into contact with the activated carbon, a raw-material titanium sulfate solution obtained by the sulfuric acid method can be used as is, a product obtained by further purifying the raw-material titanium sulfate solution obtained by the sulfuric acid method can be used, a solution obtained by dissolving titanyl sulfate in water can be used, or a commercially available product can be used. As the raw-material titanium sulfate solution to be brought into contact with the activated carbon, it is preferable to use a raw-material titanium sulfate solution obtained by the sulfuric acid method or a commercially available product can be used as is, from the viewpoint of simplifying the production process.

The concentration of sulfuric acid in the raw-material titanium sulfate solution is not particularly limited, and is, for example, 10 g/L or more and 700 g/L or less, and preferably 30 g/L or more and 600 g/L or less. If the sulfuric acid concentration is less than 10 g/L, titanium components are not sufficiently dissolved, and titanium hydroxide, titanium oxide, or the like is deposited, making it impossible to synthesize titanium phosphate stably. If the sulfuric acid concentration exceeds 700 g/L, the synthesis of titanium phosphate is inhibited, making it difficult to obtain titanium phosphate of an arbitrary particle size. The sulfuric acid concentration can be measured, for example, by a turbidimetric method.

The concentration of titanium in the raw-material titanium sulfate solution is not particularly limited, and is, for example, 10 g/L or more and 300 g/L or less, and preferably 25 g/L or more and 200 g/L or less, in terms of titanium dioxide. If the titanium concentration is less than 10 g/L, the amount of titanium phosphate obtained by synthesis decreases, which poses a problem with the production amount. If the titanium concentration exceeds 300 g/L, titanium hydroxide, titanium oxide, or the like is deposited, making it impossible to synthesize titanium phosphate stably. The titanium concentration can be measured by the method described in JIS K 5116:2004, as the titanium dioxide content.

The lower limit of the total organic carbon content of the raw-material titanium sulfate solution is not particularly limited, and is, for example, more than 3 mg/L, and may be 4 mg/L or more, 5 mg/L or more, 6 mg/L or more, or 7 mg/L or more. The upper limit of the total organic carbon content of the raw-material titanium sulfate solution is not particularly limited, and is, for example, 15 mg/L. The total organic carbon content of the raw-material titanium sulfate solution can be measured using a TOC meter as the TOC content, and the details of the measurement method are described in Examples.

The shape of the activated carbon to be brought into contact with the raw-material titanium solution is not particularly limited, and examples thereof include powder, granular, fiber, and block shapes. The shape of the activated carbon is preferably powder or particle shape. As the activated carbon, activated carbon having the same shape can be used, or two or more activated carbons having different shapes can be used in combination.

When the shape of the activated carbon is powder or particle shape, the particle size of the activated carbon is, for example, 0.50 mm or more and 1.70 mm or less. The particle size of the activated carbon can be measured by the method described in JIS K 1474:2014.

The activated carbon may be a commercially available product or may be produced by a known method.

In one embodiment, the method of contacting a raw-material titanium sulfate solution with activated carbon includes a method of mixing the raw-material titanium sulfate solution with the activated carbon.

In the method of mixing the raw-material titanium sulfate solution with the activated carbon, the raw-material titanium sulfate solution is mixed with the activated carbon to prepare a solution containing titanium sulfate and activated carbon. The method for producing the titanium phosphate powder according to the present embodiment can include mixing the raw-material titanium sulfate solution with the activated carbon to prepare a liquid containing titanium sulfate and activated carbon.

In the method of mixing the raw-material titanium sulfate solution with the activated carbon, the mass ratio of the activated carbon to titanium (in terms of titanium dioxide) is preferably 0.003 or more, and more preferably 0.005 or more, from the viewpoint of enabling the effects of the present invention to be more effectively exerted. The upper limit of the mass ratio of the activated carbon to titanium (in terms of titanium dioxide) is not particularly limited, and, from the viewpoint of productivity, is preferably 0.03 or less, and more preferably 0.02 or less. The mass ratio of the activated carbon to titanium (in terms of titanium dioxide) is preferably 0.003 or more and 0.03 or less, and more preferably 0.005 or more and 0.02 or less.

The method of mixing the raw-material titanium sulfate solution with the activated carbon is not particularly limited, and the activated carbon may be added to the raw-material titanium sulfate solution, or the raw-material titanium sulfate solution may be added to the activated carbon.

The temperature when mixing the raw-material titanium sulfate solution with the activated carbon is not particularly limited, and is, for example, 10°C or more and 40°C or less.

In the liquid containing titanium sulfate and activated carbon obtained in this manner, the adsorption by the activated carbon starts. The adsorption time is not particularly limited, and is, for example, 3 hours or more and 24 hours or less, and more preferably 4 hours or more and 12 hours or less. The adsorption by the activated carbon may be carried out in a state where the liquid containing titanium sulfate and the activated carbon is left to stand or in a stirred state.

In one embodiment, the method of contacting a raw-material titanium sulfate solution with activated carbon includes a method of passing the raw-material titanium sulfate solution through a column charged with the activated carbon.

In the method of passing the raw-material titanium sulfate solution through a column charged with the activated carbon, the raw-material titanium sulfate solution is passed through a column charged with the activated carbon to prepare a raw-material titanium sulfate solution that has been treated with activated carbon.

Any conventionally known columns can be used as the column charged with activated carbon.

When the raw-material titanium sulfate solution is passed through the column charged with the activated carbon, the contact temperature, contact time, and liquid-passage rate are not particularly limited. The contact temperature is, for example, 10°C or more and 40°C or less. The contact time is, for example, 3 hours or more.

A titanium sulfate solution can be obtained by contacting a raw-material titanium sulfate solution with activated carbon followed by filtration with a filter.

The material of the filter to be used is not particularly limited, and examples thereof include resins, such as cellulose-mixed ester, polyvinylidene fluoride (PVDF), polytetrafluoroethylene (PTFE), ethylene-tetrafluoroethylene copolymer, polycarbonate, polyether sulfone, cellulose acetate, nitrocellulose, regenerated cellulose, polyamide, triacetylcellulose, polypropylene, polyvinyl chloride (PVC), nylon, nylon 66, polysulfone, polyester, polypropylene/polyethylene, acrylic copolymer, polycarbonate, polylactic acid, polycaprolactone, polyglycolic acid, polydioxanone, polyhydroxybutyrate, polybutadiene, polyurethane, polystyrene (PS), polymethyl methacrylate, and polycarbonate, glass, and metal.

The structure of the filter to be used is not particularly limited, and examples thereof include a depth structure, a pleated structure, and a membrane structure.

The filtration accuracy of the filter to be used may be appropriately selected according to the activated carbon used. The lower limit of the filtration accuracy of the filter is, for example, 0.1 µm or more, 0.6 µm or more, or 1.2 µm or more. The upper limit of the filtration accuracy of the filter is, for example, 2.5 µm or less, 2.0 µm or less, 1.5 µm or less, or 1.0 µm or less. The filtration accuracy of the filter is, for example, 0.1 µm or more and 2.5 µm or less, preferably 0.6 µm or more and 2.0 µm or less, and more preferably 1.2 µm or more and 1.5 µm or less. The filtration accuracy of the filter may be 1.2 µm or more and 2.5 µm or less, 0.6 µm or more and 2.0 µm or less, or 0.1 µm or more and 1.0 µm or less.

The filter to be used may be a commercially available product.

The method of filtration is not particularly limited, and may be any selected from natural filtration at a normal pressure, suction filtration, pressure filtration, and centrifugal filtration.

The filtration with a filter may be performed twice or more.

Impurities derived from the activated carbon and impurities (in particular, organic matter) in the raw-material titanium sulfate solution can be sufficiently removed by filtering the liquid containing titanium sulfate and the activated carbon or the raw-material titanium sulfate solution that has been treated with the activated carbon.

As described above, a coagulant is used in the raw-material titanium sulfate solution to remove impurities such as iron components derived from titanium-containing ore, and the raw-material titanium sulfate solution contains dissolved organic carbon derived from the coagulant as the total organic carbon (TOC). The organic carbon remains without separating as a component even through the cleaning (washing) process after the synthesis of the titanium phosphate powder, and may appear as black and gray foreign materials in the titanium phosphate powder after the drying process, or may cause a decrease in whiteness of the titanium phosphate powder.

The total organic carbon content of the titanium sulfate solution according to the present embodiment is 3 mg/L or less, and preferably 1 mg/L or more and 3 mg/L or less. The total organic carbon content of the titanium sulfate solution may be 1 mg/L or more and 2 mg/L or less. In order that the total organic carbon content of the titanium sulfate solution is less than 1 mg/L, a large amount of activated carbon and a long adsorption time are required, which are not preferable from the viewpoint of productivity. When the total organic carbon content of the titanium sulfate solution exceeds 3 mg/L, the whiteness of the titanium phosphate powder decreases (whiteness: less than 95), or many colored foreign materials such as black and gray are found on the slurry surface of the titanium phosphate powder. Therefore, the appearance becomes poor due to the occurrence of color changes in transmitted light, the presence of a foreign material in a coating film, and the like, in the evaluation of the formation of the coating film containing the titanium phosphate powder.

The total organic carbon content of the titanium sulfate solution is a value obtained by measuring the total organic carbon content of the titanium sulfate solution immediately after production (within 24 hours after preparation). The total organic carbon content of the titanium sulfate solution can be measured using a total organic carbon meter, and the details of the measurement method are described in Examples.

The light transmittance of the titanium sulfate solution according to the present embodiment at a wavelength of 550 nm is a transmittance value obtained by measuring the titanium sulfate solution immediately after the production (within 24 hours after the preparation) when the light transmittance of pure water at a wavelength of 550 nm is taken as 100%. The light transmittance of the titanium sulfate solution at a wavelength of 550 nm can be measured using a spectrophotometer, and the details of the measurement method are described in Examples.

The light transmittance of the titanium sulfate solution according to the present embodiment at a wavelength of 550 nm is, for example, 70% or more and 100% or less, preferably 90% or more and 100% or less, and more preferably 95% or more and 100% or less. When the light transmittance of the titanium sulfate solution at a wavelength of 550 nm is less than 70%, the presence of particles in the titanium sulfate solution causes the occurrence of impurities and variations in the shape of compounds during the synthesis of the titanium phosphate powder.

The titanium sulfate solution according to the present embodiment can suppress a decrease in light transmittance at a wavelength of 550 nm even after long-term storage. The deposition of particles is more facilitated as the ambient temperature for storage is higher, and therefore, the light transmittance of the titanium sulfate solution at a wavelength of 550 nm decreases. The light transmittance of the titanium sulfate solution at a wavelength of 550 nm is, for example, 70% or more, preferably 90% or more, more preferably 95% or more, and further preferably 97% or more (upper limit of 100%) when stored at 43°C for three weeks. The light transmittance of the titanium sulfate solution at a wavelength of 550 nm is preferably 90% or more, and more preferably 95% or more, even when stored at 43°C for four weeks or more (e.g., nine weeks).

The titanium sulfate solution according to the present embodiment has impurities (in particular, organic matter) sufficiently removed, and can suppress changes in transmittance over time (decrease in transmittance). Therefore, an embodiment of the present invention refers to a titanium sulfate solution having a total organic carbon content of 3 mg/L or less. The titanium sulfate solution according to the present embodiment preferably has a light transmittance of 95% or more at a wavelength of 550 nm. An embodiment of the present invention refers to a method for purifying a titanium sulfate solution, the method including contacting a raw-material titanium sulfate solution with activated carbon followed by filtration with a filter. The method for purifying a titanium sulfate solution according to the present embodiment can further include mixing the raw-material titanium sulfate solution with the activated carbon to prepare a liquid containing titanium sulfate and the activated carbon, or passing the raw-material titanium sulfate solution through a column charged with the activated carbon to prepare a raw-material titanium sulfate solution that has been treated with activated carbon. When the method for purifying a titanium sulfate solution according to the present embodiment includes mixing the raw-material titanium sulfate solution with the activated carbon to prepare a liquid containing titanium sulfate and the activated carbon, the mass ratio of the activated carbon to titanium (in terms of titanium dioxide) in the raw-material titanium sulfate solution is preferably 0.005 or more.

The method for producing titanium phosphate powder according to the present embodiment includes mixing the titanium sulfate solution obtained as described above with a phosphoric acid solution to prepare a mixture.

The phosphoric acid solution contains phosphoric acid as a phosphorus-containing substance.

The concentration of phosphoric acid in the phosphoric acid solution is, for example, 50% by mass or more and less than 100% by mass, and preferably 80% by mass or more and less than 100% by mass.

The phosphoric acid solution can further contain phosphate. The type of salt is not particularly limited, and examples thereof include metal salts (e.g., alkali metal salts, group 2 element salts), and amine salts. One salt may be used alone, or two or more may be used in combination. One phosphate may be used alone, or two or more may be used in combination. When the phosphoric acid solution contains phosphate, the phosphate concentration is, for example, 50% by mass or more and less than 100% by mass, and preferably 80% by mass or more and less than 100% by mass. In one embodiment, it is preferable that the phosphoric acid solution do not contain phosphate.

The phosphoric acid solution contains water. The concentration of water in the phosphoric acid solution is, for example, more than 0% by mass and 50% by mass or less, and preferably more than 0% by mass and 20% by mass or less. In one embodiment, the phosphoric acid solution consists of phosphoric acid and water.

The mixture according to the present embodiment is prepared by mixing a titanium sulfate solution, a phosphoric acid solution, and optionally other components.

The method of mixing a titanium sulfate solution, a phosphoric acid solution, and optionally other components is not particularly limited. The mixing method, mixing order, mixing conditions, and the like may be appropriately adopted from known methods.

The concentration of phosphoric acid in the mixture is, for example, 20% by mass or more and 40% by mass or less, and preferably 21% by mass or more and 35% by mass or less, based on the total mass of the mixture.

The concentration of sulfuric acid in the mixture is, for example, 2% by mass or more and 15% by mass or less, and preferably 3% by mass or more and 12% by mass or less, based on the total mass of the mixture.

The concentration of titanium in the mixture is, for example, 1% by mass or more and 10% by mass or less, and preferably 2% by mass or more and 5% by mass or less, in terms of titanium dioxide, based on the total mass of the mixture.

Examples of the other components include acids containing neither phosphorus nor titanium. The acids containing neither phosphorus nor titanium are not particularly limited, and examples thereof include known organic acids and known inorganic acids. Examples of the acids containing neither phosphorus nor titanium include hydrochloride, sulfuric acid, nitric acid, carbonic acid, acetic acid, citric acid, and formic acid. As the acids contain neither phosphorus nor titanium, one may be used alone, or two or more may be used in combination. The acids containing neither phosphorus nor titanium preferably include at least one selected from the group consisting of hydrochloride, sulfuric acid, nitric acid, carbonic acid, acetic acid, citric acid, and formic acid, and more preferably include sulfuric acid. The content of these acids (preferably sulfuric acid) (the total content when two or more are included) is preferably 50% by mass or more, more preferably 90% by mass or more, and further preferably 100% by mass (upper limit of 100% by mass), based on the total mass of the acids containing neither phosphorus nor titanium.

The titanium phosphate can be produced by reacting the mixture obtained above using a hydrothermal synthesis method. The method for producing titanium phosphate powder according to the present embodiment can include reacting the mixed solution obtained above using a hydrothermal synthesis method to prepare a liquid containing titanium phosphate powder.

The conditions for the hydrothermal synthesis method are not particularly limited, and conventionally known conditions can be appropriately adopted. The reaction temperature is, for example, 50°C or more and 140°C or less, and preferably 80°C or more and 130°C or less. The reaction time is, for example, 1 hour or more and 100 hours or less, and preferably 3 hours or more and 72 hours or less.

The method for producing the titanium phosphate powder according to the present embodiment can include cleaning (preferably washing with pure water) and/or drying a liquid containing the titanium phosphate powder obtained above. The methods of cleaning and drying are not particularly limited, and conventionally known methods can be appropriately adopted.

It can be confirmed using a powder X-ray diffraction that the resultant powder is titanium phosphate powder that exhibits the crystallinity of the titanium phosphate represented by the chemical formula Ti(HPO₄)₂·nH₂O (0 ≤ n ≤ 1).

The method for producing titanium phosphate powder according to the present embodiment can reduce a foreign material (in particular, organic matter) other than titanium phosphate. Therefore, an embodiment of the present invention refers to titanium phosphate powder having a carbon content per unit mass of 0.005% by mass or less. The lower limit of the carbon content per unit mass of the titanium phosphate powder is not particularly limited, and is, for example, 0.001% by mass or more. The carbon content per unit mass of the titanium phosphate powder is preferably 0.001% by mass or more and 0.005% by mass or less, and may be 0.002% by mass or more and 0.004% by mass or less, or 0.003% by mass or more and 0.004% by mass or less. The carbon content per unit mass of the titanium phosphate powder can be measured using a carbon/sulfur measuring device, and the details of the measurement method are described in Examples.

The application of the obtained titanium phosphate powder is not particularly limited, and it is used in various applications. Examples of the applications of the titanium phosphate powder include inorganic particles for light scattering, specifically, inorganic particles or materials for light scattering used in light diffusion films, light diffusion plates, cosmetics, and the like; white pigments, functional fillers and lubricants. The shape of the titanium phosphate particle contained in the titanium phosphate powder is preferably thin plate-like, from the viewpoint of good sliding properties between particles. The shape of the titanium phosphate particle contained in the titanium phosphate powder is preferably thin plate-like, from the following viewpoints: when a coating film obtained by applying a slurry (e.g., ink containing titanium phosphate powder, or paint containing titanium phosphate powder) or the like obtained by dispersing or suspending the titanium phosphate powder in a solvent and drying the solvent, is applied, the surface direction of the particle is parallel to the substrate to be coated, uniform thickness tends to be obtained, resulting in obtaining high dispersibility and being less likely to cause aggregation.

Further, the refractive index of titanium phosphate is 1.79, which is higher than that of silica particles, which are widely used inorganic particles, and acrylic beads, which are polymer particles, and lower than that of titanium oxide, which is used as a white pigment. For this reason, a coating film containing titanium phosphate powder and a polymer binder has good light-scattering/transmitting properties, and can thus be used as inorganic particles for light scattering that are contained in light diffusion films, light diffusion plates, and the like.

The inorganic particles for light scattering preferably have a high whiteness so as not to change the color of scattered transmitted light, and preferably do not contain impurities derived from colored substances that are not white, which means black, gray, and the like.

The present invention encompasses the following aspects and embodiments.
[1] A method for producing a titanium phosphate powder, the method comprising preparing a mixture by mixing a titanium sulfate solution obtained by contacting a raw-material titanium sulfate solution with activated carbon followed by filtration with a filter, and a phosphoric acid solution.
[2] A method for purifying a titanium sulfate solution, the method comprising contacting a raw-material titanium sulfate solution with activated carbon followed by filtration with a filter.
[3] The method for purifying the titanium sulfate solution according to [2], in which a mass ratio of the activated carbon to titanium (in terms of titanium dioxide) in the raw-material titanium sulfate solution is 0.005 or more.
[4] A titanium phosphate powder, having a carbon content per unit mass of 0.005% by mass or less.
[5] A titanium sulfate solution, having a total organic carbon content of 3 mg/L or less.
[6] The titanium sulfate solution according to [5], having a light transmittance of 95% or more at a wavelength of 550 nm.

### EXAMPLES

The present invention will now be described in more detail by the following Example and Comparative Example. However, the technical scope of the present invention is not limited to the following Examples. Note that, unless otherwise specified, the terms "%" and "parts" mean "% by mass" and "parts by mass", respectively. Also, in the following Examples, the operation was carried out under the conditions of room temperature (25°C), unless otherwise specified.

### <Production of Titanium Sulfate Solution>

### [Production of Titanium Sulfate Solution 1]

A raw-material titanium sulfate solution 1 (aqueous titanium sulfate solution containing 118 g/L of titanium, in terms of titanium dioxide, and 500 g/L of sulfuric acid, with a total organic carbon content of 4 mg/L) was mixed with activated carbon (particle size: 1.70 mm to 0.50 mm, GW10/32, manufactured by Kuraray Co., Ltd.) so that the mass ratio of the activated carbon to titanium (in terms of titanium dioxide) was 0.01 to prepare a liquid 1 containing titanium sulfate and activated carbon. After the liquid 1 containing titanium sulfate and activated carbon was left to stand for 12 hours, a titanium sulfate solution 1 was produced by filtering the liquid 1 containing titanium sulfate and activated carbon through a filter (filtration accuracy of 0.65 µm, CES-006, manufactured by ROKITECHNO CO., LTD.).

### [Production of Titanium Sulfate Solution 2]

A raw-material titanium sulfate solution 2 (aqueous titanium sulfate solution containing 190 g/L of titanium, in terms of titanium dioxide, and 290 g/L of sulfuric acid, with a total organic carbon content of 7 mg/L) was mixed with activated carbon (particle size: 1.70 mm to 0.50 mm, GW10/32, manufactured by Kuraray Co., Ltd.) so that the mass ratio of the activated carbon to titanium (in terms of titanium dioxide) was 0.01 to prepare a liquid 2 containing titanium sulfate and activated carbon. After the liquid 2 containing titanium sulfate and activated carbon was left to stand for 12 hours, a titanium sulfate solution 2 was produced by filtering the liquid 2 containing titanium sulfate and activated carbon through a filter (filtration accuracy of 0.65 µm, CES-006, manufactured by ROKITECHNO CO., LTD.).

### <Evaluation>

### [Long-Term Storage Test 1 (XRD Measurement)]

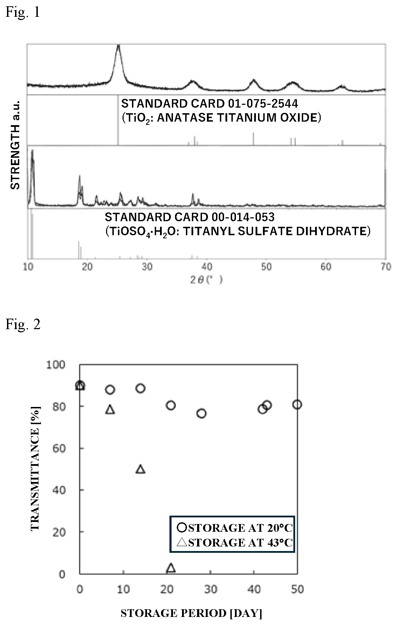

The raw-material titanium sulfate solutions 1, within 14 days after production and after four-week storage at 43°C, were filtered through a filter (pore size: 0.6 µm, Nuclepore membrane filter manufactured by Whatman, Inc.) to recover solid contents. XRD measurement of each solid content was carried out by X-ray diffraction. The results are shown in Fig. 1. The upper part of Fig. 1 shows the measurement results of the raw-material titanium sulfate solution 1 within 14 days after the production, and the lower part of Fig. 1 shows the measurement results of the raw-material titanium sulfate solution 1 after four-week storage at 43°C.

The details of the XRD measurement are shown below:
Measurement equipment: horizontal sample mount multipurpose X-ray diffractometer, Ultima IV, manufactured by Rigaku Corporation
X-ray: 20 kV/10 mA
Divergence slit: 1°
Divergence length restriction slit: 10 mm
Scattering slit: 2°
Receiving slit: 0.05 mm
kβ filter
Start: 10
Stop: 70
Step: 0.01
Standard card: 01-075-2544 or 00-014-053.

As shown in Fig. 1, it can be seen that titanium oxide was already present in the raw-material titanium sulfate solution 1 within 14 days after production, and that titanyl sulfate was deposited in the raw-material titanium sulfate solution 1 after four-week storage at 43°C.

### [Long-Term Storage Test 2 (Evaluation of Transmittance)]

Measurement samples used were raw-material titanium sulfate solutions 1 within 14 days after the production with storage at 20°C (Day 7, Day 14, Day 21, Day 28, Day 42, Day 43) and after storage at 43°C (Day 7, Day 14, Day 21).

The light transmittance of the measurement samples at a wavelength of 550 nm was measured using an ultraviolet-visible spectrophotometer (uv-2450, manufactured by Shimadzu Corporation), and the transmittance of the measurement samples was evaluated when the light transmittance of pure water at a wavelength of 550 nm was taken as 100%.

The results are shown in Fig. 2. As shown in Fig. 2, it can be seen that the raw-material titanium sulfate solution 1 has low stability, and that the transmittance deteriorates during storage.

### [Long-Term Storage Test 3 (Measurement of Transmission Spectrum and Evaluation of Transmittance)]

Measurement samples used were titanium sulfate solutions 1 immediately after the production (within 24 hours after preparation) and after storage of 1 to 9 weeks at 43°C (every week, excluding week 4).

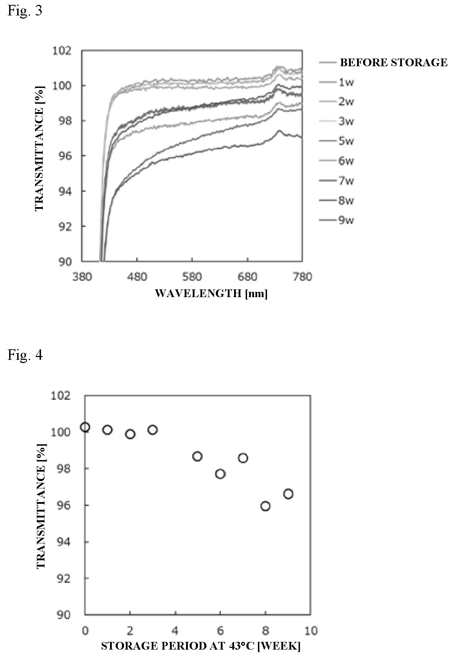

The transmission spectra of the measurement samples were measured using an ultraviolet-visible spectrophotometer (uv-2450, manufactured by Shimadzu Corporation) (baseline (Tt = 100%):pure water). The results are shown in Fig. 3.

The light transmittance of the measurement samples at a wavelength of 550 nm was measured using an ultraviolet-visible spectrophotometer (uv-2450, manufactured by Shimadzu Corporation), and the transmittance of the measurement samples was evaluated when the light transmittance of pure water at a wavelength of 550 nm was taken as 100%. The results are shown in Fig. 4.

As shown in Figs. 3 and 4, it can be seen that the titanium sulfate solution 1 has improved storage stability compared to the raw-material titanium sulfate solution 1 (Fig. 2), by performing activated carbon treatment and filtration treatment.

### [Long-Term Storage Test 4 (Evaluation of Transmittance)]

Measurement samples used were liquids 1 containing titanium sulfate and activated carbon immediately after the production (after adsorption by activated carbon), titanium sulfate solutions 1 and titanium sulfate solutions 2 immediately after the production (within 24 hours after preparation) and after three-week storage at 43°C, and raw-material titanium sulfate solutions 1 and raw-material titanium sulfate solutions 2 within 14 days after the production and after three-week storage at 43°C.

The light transmittance of the measurement samples at a wavelength of 550 nm was measured using an ultraviolet-visible spectrophotometer (uv-2450, manufactured by Shimadzu Corporation), and the transmittance of the measurement samples was evaluated when the light transmittance of pure water at a wavelength of 550 nm was taken as 100%.

The results are shown in "Transmittance (λ = 550 nm)" of Table 1. In Table 1, the item "before storage" shows the evaluation results of the measurement samples immediately after the production and within 14 days after the production, and the item "after three-week storage at 43°C" shows the evaluation results of the measurement samples after three-week storage at 43 °C.

### [Measurement of Total Organic Carbon Content]

Total organic carbon contents of the titanium sulfate solution 1, titanium sulfate solution 2, raw-material titanium sulfate solution 1, and raw-material titanium sulfate solution 2 were measured using a total organic carbon meter (TOC-L, manufactured by Shimadzu Corporation).

Measurement samples used were titanium sulfate solutions 1 and titanium sulfate solutions 2 immediately after the production, and raw-material titanium sulfate solutions 1 and raw-material titanium sulfate solutions 2 within 14 days after the production.

The results are shown in "TOC content of titanium sulfate solution (mg/L)" of Table 1.

### <Production 1 of Titanium Phosphate Powder>

### [Production of Titanium Phosphate Powder 1]

To 85% by mass of aqueous phosphate solution, the titanium sulfate solution 1 and pure water were added while stirring to obtain a mixture. The mixture was filled into an autoclave (sealed container), followed by hydrothermal treatment by heating to 130°C. The hydrothermal treatment was carried out for five hours under natural pressure. After the hydrothermal treatment, the mixture was cleaned with pure water (washing treatment) and dried in a crucible at 105°C for 24 hours (drying treatment) to obtain a titanium phosphate powder 1. The appearance of the titanium phosphate powder 1 was white, and no gray or black impurities were visually observed.

### [Production of Titanium Phosphate Powder 2]

A titanium phosphate powder 2 was obtained in the same manner as in the production of the titanium phosphate powder 1, except that the titanium sulfate solution 2 was used instead of the titanium sulfate solution 1. The appearance of the titanium phosphate powder 2 was white, and no gray or black impurities were visually observed.

### [Production of Titanium Phosphate Powder 3]

A titanium phosphate powder 3 was obtained in the same manner as in the production of the titanium phosphate powder 1, except that the raw-material titanium sulfate solution 1 was used instead of the titanium sulfate solution 1. The appearance of the titanium phosphate powder 3 was white; however, gray or black impurities were visually observed.

### [Production of Titanium Phosphate Powder 4]

A titanium phosphate powder 4 was obtained in the same manner as in the production of the titanium phosphate powder 1, except that the raw-material titanium sulfate solution 2 was used instead of the titanium sulfate solution 1. The appearance of the titanium phosphate powder 4 was white; however, gray or black impurities were visually observed.

### <Evaluation>

### [Measurement of Carbon Content]

The carbon contents per unit mass of the titanium phosphate powder 1 to 4 were measured using a carbon/sulfur measuring device (EMIA-320V2 model, manufactured by HORIBA, Ltd.).

When the carbon content per unit mass was 0.005% by mass or less, it was considered good, and when the carbon content per unit mass exceeded 0.005% by mass, it was considered poor.

The results are shown in Table 2.

### [Evaluation of Foreign material in Titanium Phosphate Powder]

Slurries were prepared by adding water to 50 g each of titanium phosphate powder 1 to 4 so that the titanium phosphate powder concentration was 10% by mass. After shaking the slurries, the liquid surface was visually inspected for foreign materials.

When there were 5 or less foreign materials, it was marked as "o", and when there were 6 or more foreign materials, it was marked as "×".

The results are shown in Table 2.

### [Table 1]

**(Table 1)**

| | Raw-material titanium sulfate solution | Activated carbon/ titanium (mass ratio) | Presence or absence filtration treatment | Transmittance (λ = 550 nm) | | TOC content of titanium sulfate solution (mg/L) | Remarks |
|---|---|---|---|---|---|---|---|
| | | | | Before storage | After three-week storage at 43°C | | |
| Titanium sulfate solution 1 | 1 | 0.01 | Presence | 100% | 100% | 2 mg/L | Example |
| Titanium sulfate solution 2 | 2 | 0.01 | Presence | 100% | 100% | 1 mg/L | Example |
| Raw-material titanium sulfate solution 1 | - | 0 | Absence | 91% | 62% | 4 mg/L | Comparative Example |
| Raw-material titanium sulfate solution 2 | - | 0 | Absence | 70% | 60% | 7 mg/L | Comparative Example |
| Liquid 1 containing titanium sulfate and activated carbon | 1 | 0.01 | Absence | Less than 10% | Not measured | - | Reference Example |

### [Table 2]

**(Table 2)**

| | Titanium sulfate solution | Carbon content per unit mass of titanium phosphate powder (% by mass) | Evaluation of foreign material in titanium phosphate powder slurry | Remarks |
|---|---|---|---|---|
| Titanium phosphate powder 1 | Titanium sulfate solution 1 | 0.004 | o | Example |
| Titanium phosphate powder 2 | Titanium sulfate solution 2 | 0.003 | o | Example |
| Titanium phosphate powder 3 | Raw-material titanium sulfate solution 1 | 0.008 | × | Comparative Example |
| Titanium phosphate powder 4 | Raw-material titanium sulfate solution 2 | 0.011 | × | Comparative Example |

As shown in Table 1, since the titanium sulfate solutions in Examples were produced by treating the raw-material titanium sulfate solution with activated carbon and filtering it, the transmittance immediately after production (before storage) is 100%, indicating that the transmittance is higher than that of the raw-material titanium sulfate solution. In addition, the titanium sulfate solutions in Examples have a transmittance of 100% after three-week storage at 43°C, indicating no decrease in transmittance due to storage and high storage stability. Further, the titanium sulfate solutions in Examples have a total organic carbon content of 3 mg/L or less, indicating that impurity levels have decreased.

As shown in Table 2, it can be seen that the carbon content of the titanium phosphate powders of Examples is reduced to 0.005% by mass or less, by using the titanium sulfate solution having a total organic carbon content of 3 mg/L or less (see Table 1). Therefore, it can be seen that foreign materials (in particular, organic matter) in the slurry of the titanium phosphate powders of Examples can be sufficiently removed.

### <Production 2 of Titanium Phosphate Powder>

### [Production of Titanium Phosphate Powder 5]

A raw-material titanium sulfate solution 2 (aqueous titanium sulfate solution containing 190 g/L of titanium, in terms of titanium dioxide, and 290 g/L of sulfuric acid, with a total organic carbon content of 7 mg/L) was mixed with activated carbon (particle size: 1.70 mm to 0.50 mm, GW10/32, manufactured by Kuraray Co., Ltd.) so that the mass ratio of the activated carbon to titanium (in terms of titanium dioxide) was 0.01 to prepare a liquid 2 containing titanium sulfate and activated carbon. After the liquid 2 containing titanium sulfate and activated carbon was left to stand for 12 hours, a titanium sulfate solution 3 was produced by filtering the liquid 2 containing titanium sulfate and activated carbon through a filter (filtration accuracy of 1.2 µm, CES-012, manufactured by ROKITECHNO CO., LTD.). The total organic carbon content of the titanium sulfate solution 3 was 1 mg/L.

To 85% by mass of aqueous phosphate solution, the titanium sulfate solution 3 and pure water were added while stirring to obtain a mixture. The mixture was filled into an autoclave (sealed container), followed by hydrothermal treatment by heating to 130°C. The hydrothermal treatment was carried out for five hours under natural pressure. After the hydrothermal treatment, the mixture was cleaned with pure water and dried in a crucible at 105°C for 24 hours to obtain titanium phosphate powder 5. The appearance of the titanium phosphate powder 5 was white, and no gray or black impurities were visually observed.

### [Production of Titanium Phosphate Powder 6]

A raw-material titanium sulfate solution 2 (aqueous titanium sulfate solution containing 190 g/L of titanium, in terms of titanium dioxide, and 290 g/L of sulfuric acid, with a total organic carbon content of 7 mg/L) was mixed with activated carbon (particle size: 1.70 mm to 0.50 mm, GW10/32, manufactured by Kuraray Co., Ltd.) so that the mass ratio of the activated carbon to titanium (in terms of titanium dioxide) was 0.01 to prepare a liquid 2 containing titanium sulfate and activated carbon. After the liquid 2 containing titanium sulfate and activated carbon was left to stand for 12 hours, a titanium sulfate solution 4 was produced by filtering the liquid 2 containing titanium sulfate and activated carbon with a filter (filtration accuracy of 0.65 µm, CES-006, manufactured by ROKITECHNO CO., LTD.). The total organic carbon content of the titanium sulfate solution 4 was 1 mg/L.

To 85% by mass of aqueous phosphate solution, the titanium sulfate solution 4 and pure water were added while stirring to obtain a mixture. The mixture was filled into an autoclave (sealed container), followed by hydrothermal treatment by heating to 130°C. The hydrothermal treatment was carried out for five hours under natural pressure. After the hydrothermal treatment, the mixture was cleaned with pure water and dried in a crucible at 105°C for 24 hours to obtain titanium phosphate powder 6. The appearance of the titanium phosphate powder 6 was white, and no gray or black impurities were visually observed.

### <Evaluation>

### [Evaluation of Foreign material]

The liquid surface of the mixture was visually inspected for foreign materials in the hydrothermal treatment and washing treatment.

A trace amount of foreign materials derived from activated carbon was observed in the production of titanium phosphate powder 5; however, it was determined that this was not a problem for practical use. No foreign materials derived from activated carbon were observed in the production of titanium phosphate powder 6.

The present application is based on Japanese Patent Application No. 2023-188363 filed on November 2, 2023, the content of which is incorporated herein by reference in its entirety.

## Claims

1. A method for producing a titanium phosphate powder, the method comprising preparing a mixture by mixing a titanium sulfate solution obtained by contacting a raw-material titanium sulfate solution with activated carbon followed by filtration with a filter, and a phosphoric acid solution.

2. A method for purifying a titanium sulfate solution, the method comprising contacting a raw-material titanium sulfate solution with activated carbon followed by filtration with a filter.

3. The method for purifying the titanium sulfate solution according to claim 2, wherein a mass ratio of the activated carbon to titanium (in terms of titanium dioxide) in the raw-material titanium sulfate solution is 0.005 or more.

4. A titanium phosphate powder, having a carbon content per unit mass of 0.005% by mass or less.

5. A titanium sulfate solution, having a total organic carbon content of 3 mg/L or less.

6. The titanium sulfate solution according to claim 5, having a light transmittance of 95% or more at a wavelength of 550 nm.
